Europäisches Patentamt

European Patent Office

Office européen des brevets

(19)

(11) Numéro de publication: **0 255 787**
**B1**

(12) **FASCICULE DE BREVET EUROPEEN**

(45) Date de publication du fascicule du brevet: **03.10.90**

(51) Int. Cl.⁵: **F 16 L 13/00**

(21) Numéro de dépôt: **87401632.2**

(22) Date de dépôt: **10.07.87**

(54) **dispositif de raccord rapide d'un tube, d'un soufflet corrugué ou d'un tuyau sur un embout et son procédé de montage.**

(30) Priorité: **28.07.86 FR 8610899**

(43) Date de publication de la demande:
**10.02.88 Bulletin 88/06**

(45) Mention de la délivrance du brevet:
**03.10.90 Bulletin 90/40**

(84) Etats contractants désignés:
**DE ES GB IT NL SE**

(56) Documents cités:
**EP-A-0 157 640**
**FR-A-2 240 401**
**FR-A-2 306 785**
**US-A-4 035 007**

(73) Titulaire: **HUTCHINSON**
**2 rue Balzac**
**F-75008 Paris (FR)**

(72) Inventeur: **Argy, Gilles**
**15ter, rue Nationale**
**F-78940 la Queue les Yvelines (FR)**

(74) Mandataire: **Orès, Bernard et al**
**Cabinet ORES 6, Avenue de Messine**
**F-75008 Paris (FR)**

Courier Press, Leamington Spa, England.

## Description

L'invention a pour objet un dispositif de raccord rapide d'un tube ou tuyau, sur un embout et son procédé de montage.

Elle vise, notamment, un procédé et un dispositif de raccord rapide d'un tube ou tuyau sur un embout propres à être utilisés dans le domaine de l'industrie automobile, par exemple pour le montage d'une durite sur le radiateur et/ou le moteur d'un véhicule ou encore la fixation de soufflets déformables protégeant les cardans de transmission sur les parties rigides desdits organes de transmission.

On utilise actuellement, pour la fixation sur les embouts, de tubes ou tuyaux souples formant certaines canalisations des véhicules automobiles, des colliers de serrage à band ou fil métallique qui, quelle que soit la réalisation proposée, sont mis en place manuellement et ainsi parfois de manière incorrecte, de sorte que, lors des opérations de contrôle en fin de chaîne de montage, il apparaît dans certains cas des défauts d'étanchéité à la liaison des tubes ou tuyaux avec leurs embouts respectifs, ce qui rend nécessaire des "reprises", c'est-à-dire des opérations à la fois longues et coûteuses.

Pour tenter de pallier ces difficultés d'une part et, pour essayer de rendre aussi automatique que possible le montage des tubes ou tuyaux sur leurs embouts respectifs, d'autre part, on a déjà proposé des dispositifs d'assemblage généralement constitués par un corps en matière plastique rendu solidaire du tube ou tuyau et qui est propre à coopérer avec un organe conjugué fixé sur l'embout. De tels dispositifs connus, s'ils donnent satisfaction en ce qui concerne l'étanchéité au fluide circulant dans le tube ou tuyau, présentent cependant de nombreux inconvénients. Ils sont de structure mécanique relativement complexe et ont un encombrement plus important que celui des colliers qu'ils sont destinés à remplacer ce qui les rend parfois impropres à leur utilisation sur des ensembles où l'espace fait défaut; ils exigent, en outre, la présence de joints, généralement toriques qui, non seulement en grèvent le coût, mais encore peuvent être la cause d'un manque de fiabilité à long terme en raison de leur destruction progressive, concomitante à celle de la matière plastique utilisée, notamment sous l'action de la chaleur.

Le besoin existe donc d'un dispositif de raccord rapide et sûr d'un tube ou tuyau sur un embout qui puisse être mis en oeuvre dans le domaine de l'industrie automobile, c'est-à-dire notamment, par un processus d'automatisation aussi complet que possible et c'est, précisément, un but de l'invention de fournir un tel dispositif et son procédé de montage.

C'est, aussi, un but de l'invention de fournir un dispositif qui, assemblé par un ou des robots d'une chaîne de montage de véhicules automobiles, assure une excellente étanchéité au fluide circulant dans le tube ou tuyau ou à la graisse enfermée dans le soufflet, tout en ayant une durée de vie importante, et cela que le fluide transporté, dans le cas d'un tube ou tuyau, soit de l'eau de refroidissement du moteur, du carburant, du liquide de freinage ou l'air d'un circuit pneumatique.

C'est, à cet égard, un but de l'invention de fournir un procédé et un dispositif qui assurent une fixation suffisamment résistante du tube ou tuyau sur l'embout, — ou du soufflet sur l'arbre ou le bol fusée — pour que n'apparaissent pas des désolidarisations intempestives de l'un par rapport à l'autre soit sous l'action de la pression du fluide, soit pour d'autres raisons.

C'est, enfin, un but de l'invention de fournir un tel dispositif dont l'encombrement ne soit pas trop important et, en tout cas, peu différent de celui des dispositifs à colliers connus.

Pour résoudre le problème posé, la Demanderesse a pensé faire application des "alliages à mémoire de forme", c'est-à-dire de matériaux qui, mis en forme à une certaine température, présentent la propriété de voir ladite forme brutalement modifiée, suivant un cycle irréversible ou non, lorsqu'ils sont portés à une température critique dite température de transition. De tels alliages sont décrits, par exemple, dans US—A— 4 035 007 ou dans FR—A—2 306 785 qui exposent les propriétés de ces alliages et décrivent en particulier les cycles d'hystérésis en température, définissent la température de transition et indiquent des procédés de pré-conditionnement permettant d'élever ladite température de transition. Un raccord en un tel matériau a déjà été proposé pour l'assemblage entre eux de tubes métalliques; il est constitué par un manchon en "Betalloy" (une marque déposée de la Société RAYCHEM CORPORATION, CALIFORNIE, USA) garni intérieurement d'une douille d'un diamètre légèrement supérieur à celui des tubes à assembler qui y sont placés bout à bout et qui sont réunis entre eux après contraction brutale du manchon lorsque celui-ci est porté à une température supérieure à la température de transition par l'action d'un chalumeau. Ce dispositif connu, prévu pour relier des tubes de cuivre ou d'aluminium, est relativement volumineux et ne peut pas être utilisé, sans autre, pour résoudre le problème posé qui est celui du montage, sans encombrement excessif, d'un tube ou tuyau souple, comme une durite, sur un embout.

Un dispositif de raccordement composite est également décrit dans FR—A—2 306 785 qui fait application d'un élément creux susceptible de contraction thermique, formé d'un métal doué de mémoire et d'un élément en manchon placé à l'intérieur de l'élément en métal doué de mémoire pour renforcer l'accouplement formé entre le dispositif et un substrat. Celui-ci, cependant, ne donne aucune indication quant aux moyens d'atteindre la température de transition relativement faible, de l'ordre de 0°C, de l'alliage mis en oeuvre, alors que si l'utilisation d'un courant électrique est décrite dans EP—A—0 157 640, c'est aussi pour provoquer la fusion partielle d'un anneau en polymère conducteur.

A la suite des travaux qu'elle a menés, la Demanderesse a trouvé qu'il était possible de résoudre le problème posé à l'aide d'un anneau dont le diamètre interne avant solidarisation du tube, soufflet, tuyau ou analogue sur l'embout correspond à celui dudit tube, tuyau ou soufflet et caractérisé en ce que l'alliage à mémoire de forme est à cycle irréversible et à température de transition supérieure à une valeur de l'ordre de 120—160°C, ledit anneau ayant un diamètre inférieur à celui de sa condition initiale pour fermement serrer le tube, soufflet, tuyau sur l'embout aprés qu'il ait été rapidement ramené à une température supérieure à ladite température de transition par l'effet Joule d'un courant électrique qui le traverse et qui lui est appliqué par l'intermédiaire de bornes d'entrée et de sortie de courant ménagées sur sa surface externe.

Le procédé de montage du dispositif est alors caractérisé en ce que, après avoir rapporté le tube ou tuyau garni de l'anneau sur un embout, — ou le soufflet muni de l'anneau sur un arbre ou un bol fusée de transmission —, on relie lesdites bornes d'entrée et de sortie de courant à un générateur, on autorise le passage de courant pendant un temps prédéterminé tel que ledit anneau soit porté par effet Joule à une température supérieure à la température de transition dudit alliage, et on déconnecte le générateur de courant des bornes de l'anneau.

Dans une première réalisation du dispositif, l'alliage à mémoire a une température de transition légèrement supérieure à 150°C et les bornes d'entrée et de sortie de courant électrique sont ménagées en des zones diamétralement opposées de la surface externe de l'anneau.

Dans une autre réalisation, l'anneau est noyé à l'intérieur d'un appendice surmoulé sur l'extrémité libre du tube ou tuyau et les bornes d'entrée et de sortie du courant électrique font saillie à l'extérieur de l'appendice surmoulé.

Une telle réalisation permet d'associer suivant un ensemble unitaire l'anneau et le tube ou tuyau dont il doit assurer le montage, par exemple une durite de moteur d'automobile ou une canalisation d'amenée de carburant.

Dans un tel dispositif, l'alliage à mémoire de forme est choisi pour présenter une température de transition supérieure à la température de surmoulage, par exemple de l'ordre de 160°C.

Pour tenir compte de la déformation brutale de l'anneau en alliage à mémoire de forme lorsqu'est atteinte la température de transition, l'invention prévoit d'associer au dispositif un répartiteur de contraintes, le plus simplement un manchon déformable interposé entre l'anneau et le tube ou tuyau à fixer sur l'embout.

Ledit répartiteur de contraintes peut être réalisé en un matériau métallique, ou être moulé en une matière plastique. Dans ce dernier cas, il présente les qualités d'élasticité et/ou de souplesse souhaitées, soit par sa forme, soit par la nature du matériau mis en oeuvre, qui complémentairement est choisi pour résister aux températures atteintes par l'anneau au cours de son échauffement par effet Joule.

On évite ainsi, à l'aide du répartiteur de contraintes, d'exercer des efforts trop importants sur le matériau constitutif du tube ou tuyau, généralement un élastomère vulcanisable ou thermoplastique susceptible de fluer, avec pour conséquence la possibilité d'une désolidarisation du tube ou tuyau de l'embout sur lequel il est fixé.

L'invention permet également de réunir en un ensemble unitaire un tube, tuyau ou soufflet corrugué comportant un dispositif de raccord rapide tel que défini ci-dessus et l'invention vise spécifiquement dans son cadre un tel ensemble unitaire.

L'invention sera bien comprise par la description qui suit, faite à titre d'exemple et en référence au dessin annexé dans lequel:

la figure 1 est une vue schématique partielle, en coupe, d'un dispositif selon l'invention pour une première forme de réalisation;

la figure 2 est une vue du dispositif mais pour une autre condition;

la figure 3 est une vue en coupe selon la ligne 3—3 de la figure 2, mais à plus petite échelle, illustrant le procédé de montage;

la figure 4 est une vue schématique analogue à celle de la figure 1, mais pour une autre forme de réalisation;

la figure 5 montre, en coupe, un organe répartiteur de contraintes propre à être utilisé dans un dispositif selon l'invention;

la figure 6 est une vue analogue à celle de la figure 5 mais pour une autre forme de réalisation;

la figure 7 est une vue en coupe selon la ligne 7—7 de la figure 6;

la figure 8 est une vue schématique analogue aux figures 1 et 4 mais pour encore une autre réalisation;

la figure 9 est une vue en coupe d'un anneau propre à entrer dans la constitution du dispositif montré sur la figure 8.

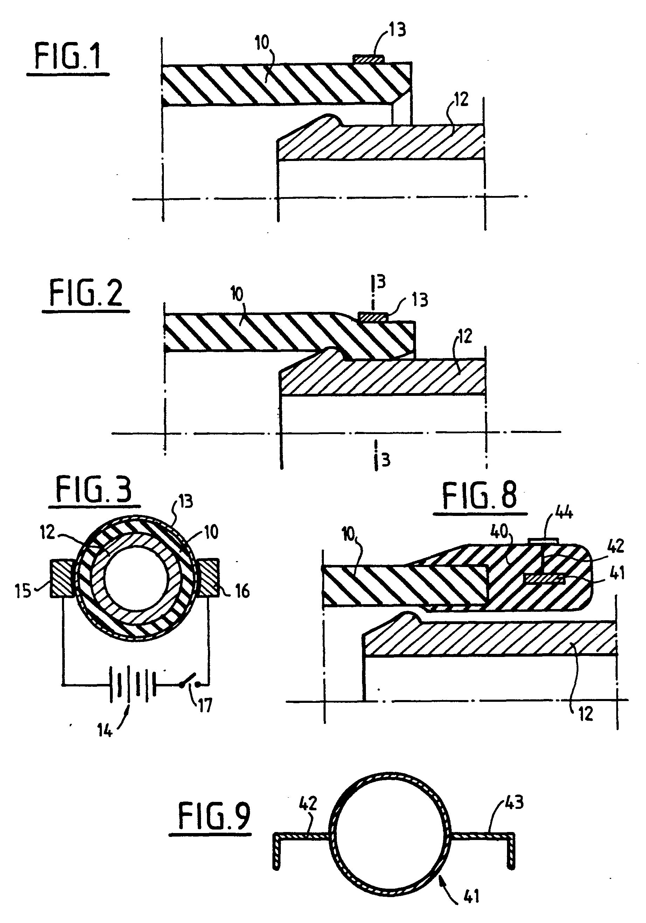

On se réfère d'abord aux figures 1 à 3 relatives à une première forme de réalisation du dispositif selon l'invention. Celui-ci comprend, pour la solidarisation d'un tube ou tuyau 10 sur un embout 12, un anneau 13 en un alliage à mémoire de forme qui, dans sa condition initiale, est d'un diamètre interne correspondant à celui du tube ou tuyau 10 sur lequel il est enfilé préalablement au montage dudit tube ou tuyau sur l'embout. Conformément à l'invention, l'alliage à mémoire de forme constitutif de l'anneau est choisi parmi les alliages à cycle irréversible présentant une température de transition supérieure à une valeur de l'ordre de 120—160°C et qui, lorsque cette température est atteinte, subit un rétreint d'environ 3 à 4% en un très court intervalle de temps pour passer à un diamètre inférieur correspondant à la condition montrée sur la figure 2 en laquelle le tube ou tuyau 10 est fermement serré sur l'embout 12.

Pour le passage d'une condition à l'autre l'invention prévoit de porter l'anneau à la température de transition par effet Joule en faisant circuler dans ledit anneau un courant électrique. Comme montré schématiquement sur la figure 3, le courant issu d'un générateur 14 est appliqué par l'intermédiaire d'une pince dont les mors 15 et 16 sont placés sur l'anneau 13 en des zones diamétralement opposées de celui-ci, formant les bornes d'entrée et de sortie de courant, la durée de passage du courant étant commandée par un interrupteur 17 auquel est associé un temporisateur (non représenté).

Un tel dispositif est bien adapté au montage automatisé d'un tube ou tuyau 10 constitué par une durite sur un embout 12 d'un moteur d'automobile, la pince électrique à mors 15, 16 étant alors intégrée au bras de manipulation d'un robot ou analogue de la chaîne de montage.

Le dispositif convient, cependant, pour d'autres applications dans lesquelles la pince à mors 15, 16 est manoeuvrée manuellement.

De bons résultats ont été obtenus en utilisant pour l'anneau 13 un alliage à mémoire de forme choisi parmi les alliages à base de nickel/titane ou cuivre/aluminium et plus particulièrement un alliage du type nickel/titane.

Dans un exemple de réalisation, ledit anneau avait un diamètre interne de 28 mm et une épaisseur de 1,5 mm. Mis en oeuvre pour la solidarisation sur un embout 12 d'un diamètre de 22 mm, d'une durite 10, à base de caoutchouc et d'un diamètre externe de 28 mm sa température de transition égale à 130°C a été obtenue par passage dans l'anneau d'un courant de 10 ampères pendant un temps de l'ordre de 5 secondes le rétreint de l'anneau ayant une valeur d'environ 4%.

Etant donné que, lors de la déformation de l'anneau, la contrainte exercée sur le tube ou tuyau 10 peut atteindre des valeurs importantes susceptibles de provoquer le fluage du matériau constitutif dudit tube ou tuyau, en particulier lorsque celui-ci est de nature élastomérique, l'invention prévoit complémentairement de disposer entre l'anneau et le tube ou tuyau un organe répartiteur de contraintes.

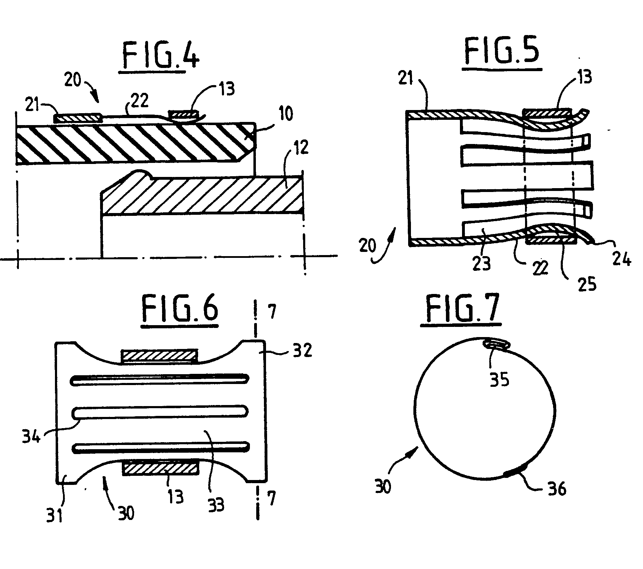

Dans une première forme de réalisation, figures 4 et 5, un tel organe est réalisé suivant un manchon 20 comportant une bague 21 d'un diamètre interne correspondant au diamètre externe du tube ou tuyau 10 et à partir de laquelle s'étendent longitudinalement des bras souples 22 régulièrement répartis sur la circonférence de la bague avec leurs extrémités libres 24 conformées suivant de légères dépressions 25 dont l'ensemble forme un siège pour l'anneau 13 et en ménageant entre eux des évidements 23 qui permettent la déformation avec rapprochement entre eux desdits bras lorsque l'anneau 13 en alliage à mémoire de forme est amené, par effet Joule, à sa température de transition provoquant le rétreint.

L'organe répartiteur de contraintes peut être réalisé en une matière plastique moulée choisie pour résister aux températures qui sont celles atteintes pour obtenir le rétreint de l'anneau 13.

Dans la réalisation selon les figures 6 et 7, l'organe répartiteur de contraintes 30 avec lequel coopère l'anneau 13 en alliage en mémoire de forme a quelque peu la forme d'un diabolo, avec des parties d'extrémités 31, 32 de plus grand diamètre que la partie centrale 33 qui est découpée pour ménager des boutonnières 34 permettant la déformation dudit organe. Celui-ci peut être réalisé, comme montré en 35 et 36 (figure 7) par roulage ou agrafage d'un feuillard métallique dans lequel les boutonnières 34 sont estampées préalablement à la mise en forme.

On se réfère maintenant aux figures 8 et 9 relatives à une autre forme de réalisation d'un dispositif selon l'invention. Dans celle-ci, le tube ou tuyau 10 est muni à son extrémité libre d'un appendice surmoulé 40 en un matériau élastomère dans lequel est noyé un anneau 41 en alliage en mémoire de forme de structure voisine de celui de la forme de réalisation précédemment décrite, mais choisi parmi les matériaux dont la température de transition est supérieure à la température de surmoulage de l'appendice 40 sur le tube ou tuyau 10. Ainsi, si cette température de surmoulage est de l'ordre de 145°C, la température de transition de l'alliage à mémoire de forme constitutif de l'anneau est choisie de l'ordre de 160°C ou plus.

A l'anneau 41 sont associées des pièces de conduction 42 et 43 (figure 9) qui, dirigées radialement en des zones diamétralement opposées sur l'anneau, traversent l'appendice 40 et font saillie, comme montré en 44 sur la figure 8, sur la surface externe dudit appendice pour servir de bornes de contact aux mors 15 et 16 de la pince électrique d'amenée du courant destiné à provoquer, par effet Joule, l'élévation de température de l'anneau 41 entraînant le rétreint de celui-ci et la fixation du dispositif sur l'embout.

Les pièces de conduction 42, 43 peuvent être, à volonté, soudées sur l'anneau 41, serties sur celui-ci, enroulées ou être d'une pièce avec lui.

Quelle que soit la réalisation choisie, elles sont avantageusement utilisées pour le positionnement de l'anneau lors de l'opération de surmoulage de l'appendice.

Un tel dispositif trouve également avantageusement application dans le domaine de l'industrie automobile, par exemple pour le montage des durites sur des embouts fixes du moteur ou du radiateur mais aussi pour la liaison de canalisations interposées sur le circuit de carburant, ou celui du système de freinage. Il forme avec le tube ou tuyau d'élastomère un ensemble unitaire qui, facile à stocker et à manipuler est de mise en oeuvre particulièrement intéressante en tant que flexible prêt à l'emploi.

L'invention peut également être avantageusement utilisée pour la fixation, sur les parties rigides (arbres ou bols fusées) des transmissions d'un véhicule automobile, de soufflets déformables en élastomère ou plastomère vendu sous la dénomination "HYTREL" (une Marque déposée de la Société DUPONT DE NEMOURS, USA) et destinés à protéger les organes desdites transmissions (cardans ou analogues).

### EXEMPLE

Un anneau 41 d'un diamètre de 24 mm et d'une épaisseur de 1,5 mm en un alliage à mémoire de forme du type nickel/titane a été noyé dans un appendice 40 en élastomère EPDM rapporté par surmoulage à une température de 145°C sur l'extrémité libre d'une durite d'un diamètre externe de 28 mm.

Un tel dispositif a été mis en oeuvre pour la fixation sur un embout d'un diamètre de 22 mm en faisant circuler pendant un temps de l'ordre de 5 secondes un courant d'une intensité de 10 ampères dans l'anneau provoquant un rétreint de 4% lequel assure la fixation sans risque d'arrachement de la durite sur l'embout.

**Revendications**

1. Dispositif de raccord rapide de deux éléments entre eux à l'aide d'un organe susceptible de rétreint constitué à partir d'un alliage à mémoire de forme, l'un des éléments étant un tube, un soufflet corrugué ou un tuyau et l'autre un embout, ledit organe étant un anneau (13, 41) dont le diamètre interne avant solidarisation du tube, soufflet, tuyau ou analogue sur l'embout correspond à celui dudit tube, tuyau ou soufflet, caractérisé en ce que l'alliage à mémoire de forme est à cycle irréversible et à température de transition supérieure à une valeur de l'ordre de 120—160°C, ledit anneau (13, 41) ayant un diamètre inférieur à celui de sa condition initiale pour fermement serrer le tube, soufflet, tuyau (10) sur l'embout (12) après qu'il ait été rapidement amené à une température supérieure à ladite température de transition par l'effet Joule d'un courant électrique qui le traverse et qui lui est appliqué par l'intermédiaire de bornes d'entrée et de sortie de courant ménagées sur sa surface externe.

2. Dispositif selon la revendication 1, caractérisé en ce que l'alliage a une température de transition légèrement supérieure à 150°C et en ce que les bornes d'entrée et de sortie de courant sont ménagées en des zones diamétralement opposées de la surface externe de l'anneau (13).

3. Dispositif selon la revendication 1, caractérisé en ce que l'anneau (41) est noyé à l'intérieur d'un appendice (40) surmoulé sur l'extrémité libre du tube ou tuyau (10) et en ce que les bornes d'entrée et de sortie de courant (42, 43, 44) font saillie à l'extérieur de l'appendice surmoulé (40).

4. Dispositif selon la revendication 3, caractérisé en ce que lesdites bornes sont ménagées par des oreilles (42, 43) dirigées radialement, au moins dans leur partie adjacente à l'anneau, et diamétralement opposées.

5. Dispositif selon les revendications 3 et 4, caractérisé en ce que l'alliage à mémoire de forme a une température de transition supérieure à la température de surmoulage, de l'ordre de 160°C.

6. Dispositif selon l'une quelconque des revendications précédentes, caractérisé en ce qu'il comprend en outre un répartiteur de contraintes (20, 30) entre l'anneau (13) et le tube (10).

7. Dispositif selon la revendication 6, caractérisé en ce que le répartiteur de contraintes (30) est un manchon en feuillard métallique découpé suivant des boutonnières longitudinales (34).

8. Dispositif selon la revendication 6, caractérisé en ce que le répartiteur de contraintes (20) est un manchon en matière plastique découpé suivant des bras souples (22) s'étendant longitudinalement et ménageant entre eux des évidements (23) permettant sa déformation.

9. Procédé de montage d'un dispositif selon l'une quelconque des revendications précédentes, caractérisé en ce qu'après avoir rapporté le tube ou tuyau (10) garni de l'anneau (13, 41) sur un embout (12), — ou le soufflet muni de l'anneau sur un arbre ou un bol fusée — on relie les bornes d'entrée et de sortie de courant à un générateur (14), on autorise le passage du courant pendant un temps prédéterminé pour que l'anneau soit porté par effet Joule à une température supérieure à la température de transition de l'alliage et on déconnecte le générateur de courant des bornes de l'anneau.

10. Dispositif de flexible, soufflet de protection de transmission ou canalisation, notamment pour l'industrie automobile, comme une durite ou analogue, caractérisé en ce qu'il réunit en un ensemble unitaire un tube, tuyau ou soufflet souple à base d'élastomère vulcanisable ou thermoplastique et un dispositif de raccord rapide selon l'une quelconque des revendications 1 à 8.

**Patentansprüche**

1. Vorrichtung zur Schnellverbindung von zwei Elementen miteinander mit Hilfe eines einschnürungsfähigen Elements, gebildet aus einer Legierung mit Formerinnerungsvermögen, wobei eines der Elemente ein Rohr, ein gewellter Balgen oder Schlauch und das andere ein Einsteckende ist; dieses Element ein Ring (13, 41) ist, dessen Innendurchmesser vor der Befestigung von Rohr, Balgen, Schlauch oder dgl. auf dem Einsteckende demjenigen dieses Rohrs, Schlauchs oder Balgens entspricht, dadurch gekennzeichnet, daß die Legierung mit Formerinnerungsvermögen von irreversiblem Zyklus und von einer Umwandlungstemperatur größer als ein Wert in der Größenordnung von 120—160°C ist; daß dieser Ring (13, 41) einen Durchmesser kleiner als den seines Ausgangszustandes hat, um Rohr, Balgen oder Schlauch (10) auf das Einsteckende (12) fest zu pressen, nachdem er schnell auf eine Temperatur oberhalb dieser Umwandlungstemperatur durch den Jouleeffekt eines elektrischen Stroms, der ihn durchfließt, gebracht wurde und der an ihn über auf seiner Außenfläche vorgesehene Eingangs- und Ausgangsklemmen gelegt ist.

2. Vorrichtung nach Anspruch 1, dadurch gekennzeichnet, daß die Legierung eine Umwandlungstemperatur geringfügig oberhalb 150°C hat und daß die Stromeingangs- und Ausgangsklemmen in diametral sich gegenüberliegenden Zonen der Außenfläche des Rings (13) angeordnet sind.

3. Vorrichtung nach Anspruch 1, dadurch gekennzeichnet, daß der Ring (41) innerhalb eines Ansatzstückes (40) eingebettet ist, der auf das freie Ende des Rohrs oder Schlauchs (10) übergeformt ist und daß die Stromeingangs- und Ausgangsklemmen (42, 43, 44) über das übergeformte Ansatzstück (40) nach außen vorstehen.

4. Vorrichtung nach Anspruch 3, dadurch gekennzeichnet, daß diese Klemmen durch radial wenigstens in ihrem dem Ring benachbarten Bereich gerichtete Ansätze (42, 43), die einander diametral gegenüberstehen, vorgesehen sind.

5. Vorrichtung nach den Ansprüche 3 und 4, dadurch gekennzeichnet, daß die Legierung mit Formerinnerungsvermögen eine Umwandlungstemperatur höher als die Temperatur des Überformens, in der Größenordnung von 160°C hat.

6. Vorrichtung nach einem der vorhergehenden Ansprüche, dadurch gekennzeichnet, daß sie im übrigen einen Spannungsverteiler (20, 30) zwischen dem Ring (13) und dem Rohr (10) aufweist.

7. Vorrichtung nach Anspruch 6, dadurch gekennzeichnet, daß der Spannungsverteiler eine Muffe aus metallischem Bandmaterial ist, die entsprechend longitudinalen Schlitzlöchern (34) geschnitten ist.

8. Vorrichtung nach Anspruch 6, dadurch gekennzeichnet, daß der Spannungsverteiler (20) eine Muffe aus Kunststoffmaterial bzw. plastischem Material ist, das entsprechend nachgiebiger Arme (22) geschnitten ist, die sich in Längsrichtung erstrecken und zwischen sich ihre Verformung erlaubender Ausnehmungen vorsehen.

9. Verfahren zur Anbringung einer Vorrichtung nach einem der vorhergehenden Ansprüche, dadurch gekennzeichnet, daß man nach Aufsetzen des mit dem Ring (13, 41) versehenden Rohres oder Schlauches (10) auf ein Spitzende (12) — oder des mit Ring versehenen Balgen auf eine Welle oder einen Gelenkzapfen — die Stromeingangs- und Ausgangsklemmen mit einem Generator (14) verbindet, den Stromdurchgang während einer vorbestimmten Zeit zuläßt, damit der Ring durch Jouleeffekt auf eine Temperatur höher als die Umwandlungstemperatur der Legierung gebracht wird und den Stromgenerator von den Klemmen des Ringes trennt.

10. Ausbildung eines biegsamen Verbindungsstücks, eines Transmissionsschutzbalgens oder einer Leitung, insbesondere für die Automobilindustrie, wie ein gummiartiger Schlauch (durite) oder dgl., dadurch gekennzeichnet, daß sie zu einer einteiligen Anordnung ein Rohr, einen Schlauch oder einen nachgiebigen Balgen auf der Basis eines vulkanisierbaren Elastomers oder Thermoplasts mit einer Schnellverbindungsvorrichtung nach einem der Ansprüche 1 bis 8 vereinigt.

## Claims

1. A quick-coupling device for coupling together two components by means of a shrinkable member made of a shape-memory alloy, one of the components being a tube, a corrugated bellows or a hose, and the other being an end fitting, said member being a ring (13, 41) whose inside diameter prior to the tube, bellows, hose, or the like being fixed on the end fitting corresponds to the diameter of said tube, hose, or bellows, the device being characterized in that the shape-memory alloy is an irreversible cycle alloy having a transition temperature higher than a value of about 120°C to 160°, said ring (13, 41) having a diameter which is less than its diameter in its initial condition for firmly clamping the tube, bellows or hose (10) on the end fitting (12) after it has been raised rapidly to a temperature higher than said transition temperature by the Joule effect of an electrical current flowing therethrough and applied thereto via current inlet and outlet terminals provided on its outside surface.

2. A device according to claim 1, characterized in that the alloy has a transition temperature which is a little higher than 150°C, and in that the current inlet and outlet terminals are provided in diametrically opposite zones of the outside surface of the ring (13).

3. A device according to claim 1, characterized in that the ring (41) is embedded inside an appendix (40) which is overmolded onto the free end of a tube or hose (10) and in that the current inlet and outlet terminals (42, 43, 44) project outside the overmolded appendix (40).

4. A device according to claim 3, characterized in that said terminals are provided by diametrically opposite lugs (42, 43) which extend radially, at least in their portions close to the ring.

5. A device according to claims 3 and 4, characterized in that the shape-memory alloy has a transition temperature higher than the overmolding temperature, the transition temperature being about 160°C.

6. A device according to any preceding claim, characterized in that it further includes a stress spreader (20, 30) between the ring (13) and the tube (10).

7. A device according to claim 6, characterized in that the stress spreader (30) is a sleeve of metal sheet having longitudinal slots (34) cut out therein.

8. A device according to claim 6, characterized in that the stress spreader (20) is a sleeve of plastic material cut out to form flexible arms (22) extending longitudinally and leaving gaps (23) between one another, enabling the sleeve to deform.

9. A method of assembling a device according to any preceding claim, characterized in that after applying the hose or tube (10) fitted with the ring (13, 41) on an end fitting (12), — or after fitting the bellows provided with the ring on a shaft or axle —, the current inlet and outlet terminals are connected to a current source (14) and current is allowed to flow for a period of time which is predetermined to ensure that the ring is raised by the Joule effect to a temperature higher than the transition temperature of the alloy, after which the current generator is disconnected from the terminals of the ring.

10. A hose, duct, or transmission-protecting bellows device, in particular for use in the car industry, for constituting a flexible hose or the like, characterized in that the device comprises a unitary assembly of a flexible bellows, hose, or tube based on a vulcanizable elastomer or a thermoplastic and a quick-coupling device according to any one of claims 1 to 8.

FIG.1

FIG.2

FIG.3

FIG.8

FIG.9

FIG.4

FIG.5

FIG.6

FIG.7